(19) Europäisches Patentamt
European Patent Office
Office européen des brevets

(11)  EP 2 966 119 B1

(12)  **EUROPEAN PATENT SPECIFICATION**

(45) Date of publication and mention
of the grant of the patent:
**11.07.2018 Bulletin 2018/28**

(51) Int Cl.:
**C08J 9/18** *(2006.01)*

(86) International application number:
**PCT/JP2014/055944**

(21) Application number: **14760548.9**

(22) Date of filing: **07.03.2014**

(87) International publication number:
**WO 2014/136933 (12.09.2014 Gazette 2014/37)**

(54) **METHOD FOR MANUFACTURING FOAMED POLYPROPYLENE-RESIN PARTICLES**

VERFAHREN ZUR HERSTELLUNG VON GESCHÄUMTEN POLYPROPYLENHARZTEILCHEN

PROCÉDÉ DE FABRICATION DE PARTICULES DE RÉSINE DE POLYPROPYLÈNE EXPANSÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2013 JP 2013046547**

(43) Date of publication of application:
**13.01.2016 Bulletin 2016/02**

(73) Proprietor: **Kaneka Corporation
Osaka-shi, Osaka 530-8288 (JP)**

(72) Inventor: **FUKUZAWA Jun
Settsu-shi
Osaka 566-0072 (JP)**

(74) Representative: **Vossius & Partner
Patentanwälte Rechtsanwälte mbB
Siebertstrasse 3
81675 München (DE)**

(56) References cited:
**WO-A1-2009/075208    WO-A1-2013/011951
WO-A1-2013/031745    JP-A- 2001 151 928
JP-A- 2004 067 768     JP-A- 2009 030 048
JP-A- 2010 090 232     JP-A- 2010 106 238
JP-A- 2012 201 861**

- **DATABASE WPI Week 200920 Thomson
Scientific, London, GB; AN 2009-E62885
XP002761984, & JP 2009 030048 A (KANEKA
CORP) 12 February 2009 (2009-02-12)**
- **DATABASE WPI Week 200969 Thomson
Scientific, London, GB; AN 2009-P25736
XP002761985, & JP 2009 221451 A (KANEKA
CORP) 1 October 2009 (2009-10-01)**

EP 2 966 119 B1

**Description**

Technical Field

The present invention relates to a method for manufacturing foamed polypropylene-resin particles. In particular, the present invention relates to a method for manufacturing foamed polypropylene-resin particles that can be suitably used as the raw material of an in-mold foam molded body, can be molded at low temperatures, and have a wide heated water vapor pressure range for molding, by a single foaming process.

Background Art

In-mold foam molded bodies produced by packing foamed polypropylene-resin particles in a mold and heat-molding the particles by water vapor have shape arbitrariness, lightweight properties, heat-insulating properties, and other features as advantages of the in-mold foam molded bodies. As compared with in-mold foam molded bodies produced from similar foamed synthetic resin particles, the in-mold foam molded bodies produced from foamed polypropylene-resin particles have better chemical resistance, heat resistance, and strain recovery after compression than those of in-mold foam molded bodies produced from foamed polystyrene-resin particles, and have better dimensional accuracy, heat resistance, and compressive strength than those of in-mold foam molded bodies produced from foamed polyethylene-resin particles. Owing to these features, the in-mold foam molded bodies produced from foamed polypropylene-resin particles are used for heat insulating materials, shock absorbing packing materials, automobile interior members, core materials for automobile bumpers, and various purposes.

On the other hand, fusion of foamed polypropylene-resin particles with each other in a mold to yield an in-mold foam molded body requires heating at a higher temperature, or heating at a higher water vapor pressure, as compared with foamed polystyrene-resin particles or foamed polyethylene-resin particles. Such molding unfortunately requires molds and molding machines that withstand high pressures, and also requires costly steam.

Most of the molding machines for in-mold foam molding of foamed polypropylene-resin particles have an upper pressure limit of about 0.4 MPa·G (G represents gauge pressure, the same meaning is applied hereinafter). The foamed polypropylene-resin particles subjected to in-mold foam molding are prepared from resins having characteristics suited for such conditions, and typically used are propylene random copolymers having a melting point of about 140 to 150°C.

However, for example, as fuel prices have risen, there is a demand for in-mold foam molding at a lower temperature, or a decrease in heated water vapor pressure for molding. When a mold with a complicated shape, a large mold, or a similar mold is used, foamed particles may be insufficiently fused with each other in some areas. If the heated water vapor pressure for molding is increased in order to fuse the areas, a resulting molded body is readily deformed or shrunk. To address the problems, there is another demand for a wider heated water vapor pressure range for molding (also called "heat molding condition range").

In order to solve the problems, resins having a low resin melting point and a higher resin rigidity than those of other resins at the same melting point have been developed, and such resins are exemplified by propylene/1-butene random copolymers and propylene/ethylene/1-butene random terpolymers prepared by using a Ziegler polymerization catalyst (Patent Document 1, Patent Document 2) and polypropylene homopolymers and propylene/ethylene random copolymers prepared by using a metallocene polymerization catalyst.

However, the propylene random copolymers containing a 1-butene comonomer prepared by using a Ziegler polymerization catalyst can have a higher resin rigidity than those of other resins at the same melting point, but cannot achieve a strength equivalent to those of resins having high melting points.

Meanwhile, the propylene/ethylene random copolymers prepared by using a metallocene polymerization catalyst can have a lower melting point and can have a low melting point of 130°C or lower. For example, foamed polypropylene-resin particles composed of a polypropylene resin having a resin melting point of 115 to 135°C and an Olsen flexural modulus of 500 MPa or more have been developed in order to achieve the in-mold foam molding at a low heating temperature (Patent Document 3). Some of the resins used in Patent Document 3 are propylene/ethylene/1-butene random terpolymers, and most of the resins are propylene/ethylene random copolymers produced by using a metallocene polymerization catalyst. In an examples in Patent Document 3, the resin melting point is 120 to 134°C, which certainly indicates the achievement of in-mold foam molding at a low heating temperature. However, an improvement is still required in terms of the in-mold foam molding at high temperatures, and a wide heated water vapor pressure range for molding has not been achieved. In addition, the polymers prepared by using a metallocene polymerization catalyst are too expensive to be put on the market inexpensively, and are industrially unfavorable.

Other foamed polypropylene-resin particles have also been developed. The foamed polypropylene-resin particles are produced by using water as a foaming agent in combination with air or nitrogen and discharging a resin into a low pressure area at a high temperature (Patent Document 4, Patent Document 5). However, even such a method using water as a foaming agent in combination with air or nitrogen still fails to achieve a wide heated water vapor range for molding.

In other words, there has been no foamed polypropylene-resin particles that can be molded at low temperatures, do not lose moldability at high temperatures, and have a wide heated water vapor pressure range for molding or no method for manufacturing such foamed polypropylene-resin particles by a single foaming process.

Patent document 6 relates to a specific process for producing expanded polyolefin resin beads comprising: dispersing polyolefin resin particles in an aqueous dispersion medium in a closed vessel; heating the dispersion to a temperature not lower than the softening temperature of the polyolefin resin particles; and then discharging the dispersion into a zone having a lower pressure than the internal pressure of the closed vessel to cause the dispersion-medium water to act as a blowing agent. The process is characterized in that the polyolefin resin particles are made of a polyolefin resin composition comprising: a polyolefin resin; a substance selected among polyethylene glycol, polyhydric alcohols having 3 to 6 carbon atoms and 3 or more hydroxy groups, and water-absorbing substances not having the function of forming cell nuclei; and a nucleating agent for expansion.

Patent document 7 relates to provide specific polyolefin resin pre-expanded beads .

After a pressure container is charged with polyolefin resin particles together with water, a dispersant and a dispersion assistant and a pH adjusting agent is added to adjust the mixture to a predetermined pH level, the content is heated and discharged under pressure into an atmosphere at a pressure lower than the inside of the pressure container to obtain polyolefin resin pre-expanded beads with a decreased amount of the dispersant remaining on the surface.

Citation List

Patent Literature

Patent Document 1: JP-A No. H01-242638
Patent Document 2: JP-A No. H07-258455
Patent Document 3: International Publication WO 2008/139822
Patent Document 4: JP-A No. 2004-67768
Patent Document 5: JP-A No. 2001-151928
Patent Document 6: International Publication WO 2009/075208
Patent Document 7: JP-A No. 2009-030048

Summary of Invention

Technical Problem

The present invention has an object to provide foamed polypropylene-resin particles that can yield an in-mold foam molded body at a low heated water vapor pressure for molding, do not lose moldability at a high heated water vapor pressure for molding, have a wide heated water vapor range for molding, exhibit good moldability even when a mold with a complicated shape, a large mold, or a similar mold is used, and give a small deterioration in physical properties such as compressive strength when used to give an in-mold foam molded body.

Solution to Problem

As a result of intensive studies for solving the problems, the inventors of the present invention have found that foaming of polypropylene-resin particles satisfying particular requirements under particular conditions enables manufacture of foamed polypropylene-resin particles that can undergo in-mold foam molding at a low heated water vapor pressure for molding, do not lose moldability at a high heated water vapor pressure for molding, have a wide heat molding condition range, exhibit good moldability even when a mold with a complicated shape, a large mold, or a similar mold is used, and give a small deterioration in physical properties such as compressive strength when used to give a polypropylene resin in-mold foam molded body, by a single foaming process, and have completed the present invention.

In other words, the present invention includes the following aspects.

[1] A method for manufacturing foamed polypropylene-resin particles by a single foaming process, the foamed polypropylene-resin particles having a heat deformation ratio of -2% or more and +2% or less, the heat deformation ratio being a ratio of change in apparent bulk density before and after heating at a temperature 15°C lower than a melting point of a polypropylene resin as a substrate resin in which the polypropylene resin is a polypropylene random copolymer containing 1-butene and/or ethylene as a comonomer; the foamed polypropylene-resin particles having an expansion ratio of 15 or more and 45 or less, the method including dispersing polypropylene-resin particles containing polyethylene glycol

and/or glycerin together with an aqueous dispersion medium in a pressure-resistant container in which the polyethylene glycol and/or glycerin is contained in an amount of 0.01% by weight or more and 2% by weight or less in 100% by weight of the polypropylene-resin particles; introducing carbon dioxide gas as a foaming agent into the pressure-resistant container; impregnating the polypropylene-resin particles with the foaming agent under a heating and pressure condition; and then discharging the polypropylene-resin particles into an area having a lower pressure than an internal pressure of the pressure-resistant container and having an atmosphere temperature of higher than 80°C and not higher than 110°C, thereby foaming the polypropylene-resin particles.

[2] The method for manufacturing foamed polypropylene-resin particles according to the aspect [1], in which the foamed polypropylene-resin particles have an expansion ratio of 18 or more and 25 or less.

[3] The method for manufacturing foamed polypropylene-resin particles according to the aspect [2], in which the polypropylene random copolymer has a melting point of 125°C or higher and 155°C or lower.

[4] The method for manufacturing foamed polypropylene-resin particles according to any one of the aspects [1] to [3], in which the polypropylene resin contains an inorganic nucleating agent.

[5] The method for manufacturing foamed polypropylene-resin particles according to any one of the aspects [1] to [4], in which the foaming agent is used in an amount of 3 parts by weight or more and 60 parts by weight or less relative to 100 parts by weight of the polypropylene-resin particles.

[6] Foamed polypropylene-resin particles manufactured by the method according to any one of the aspects [1] to [5].

[7] An in-mold foam molded body produced by in-mold foam molding of the foamed polypropylene-resin particles according to the aspect [6].

Advantageous Effects of Invention

The method of the present invention enables manufacture of foamed polypropylene-resin particles that can yield a polypropylene resin in-mold foam molded body at a low heated water vapor pressure for molding, do not lose moldability at a high heated water vapor pressure for molding, have a wide heated water vapor range for molding, exhibit good moldability even when a mold with a complicated shape, a large mold, or a similar mold is used, and give a small deterioration in physical properties such as compressive strength when used to give an in-mold foam molded body, by a single foaming process. In-mold foam molded bodies obtained by in-mold foam molding of the foamed polypropylene-resin particles obtained by the method of the present invention can be used for heat insulating materials, shock absorbing packing materials, automobile interior members, core materials for automobile bumpers, and various purposes.

Brief Description of the Drawings

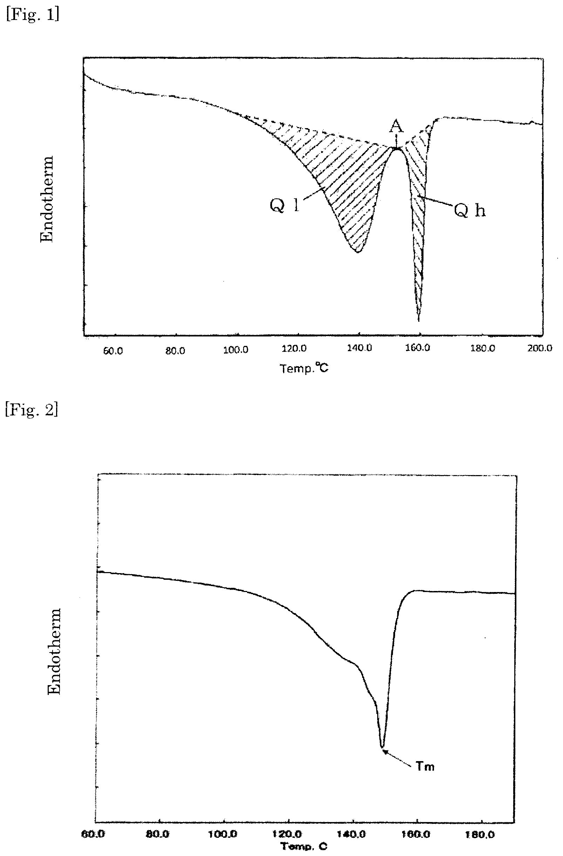

Fig. 1 is an example of DSC curve obtained when the temperature of 3 to 6 mg of foamed polypropylene-resin particles manufactured by the method of the present invention was increased from 40°C to 220°C at a temperature increase rate of 10°C/min with a differential scanning calorimeter. Between two melting peaks on the DSC curve, the point having a minimum endothermic quantity is regarded as point A. From the point A, tangent lines are drawn with respect to the DSC curve. Of the areas surrounded by the tangent lines and the DSC curve, one area at the high temperature side is a heat quantity Qh of the melting peak at the high temperature side, and the other area at the low temperature side is a heat quantity Ql of the melting peak at the low temperature side.

Fig. 2 is an example of DSC curve of the second temperature increase of DSC curves obtained by such a series of temperature histories that the temperature of 5 to 6 mg of a polypropylene random copolymer resin is increased from 40°C to 220°C at a temperature increase rate of 10°C/min to melt the resin, then the temperature is decreased from 220°C to 40°C at a temperature decrease rate of 10°C/min to crystallize the resin, and the temperature is increased from 40°C to 220°C at a temperature increase rate of 10°C/min once again.

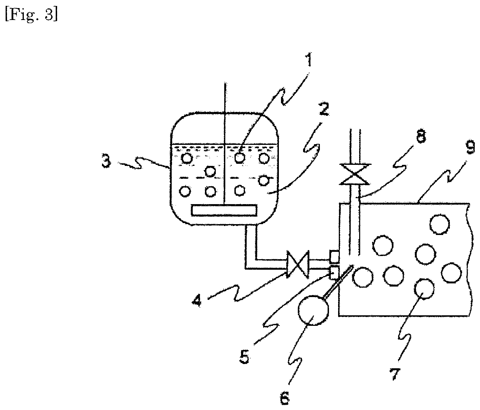

Fig. 3 is a schematic view showing an example of foaming apparatus pertaining to examples of the present invention.

Description of Embodiments

The method for manufacturing foamed polypropylene-resin particles pertaining to the present invention is a method for manufacturing foamed polypropylene-resin particles by a single foaming process. The foamed polypropylene-resin particles have a heat deformation ratio of -2% or more and +2% or less, where the heat deformation ratio is a ratio of change in apparent bulk density before and after heating at a temperature 15°C lower than the melting point of a polypropylene resin as the substrate resin, and the foamed polypropylene-resin particles have an expansion ratio of 15 or more and 45 or less. The method is characterized by including dispersing polypropylene-resin particles containing polyethylene glycol and/or glycerin together with an aqueous dispersion medium in a pressure-resistant container; introducing carbon dioxide gas as a foaming agent into the pressure-resistant container; impregnating the polypropylene-resin particles with the foaming agent under a heating and pressure condition; and then discharging the polypropylene-resin particles into an area having a lower pressure than an internal pressure of the pressure-resistant container and having a predetermined atmosphere temperature, thereby foaming the polypropylene-resin particles.

The polypropylene resin used in the present invention is a polypropylene random copolymer containing 1-butene and/or ethylene as a comonomer. The polypropylene random copolymer can contain other comonomers in addition to 1-butene and ethylene, and such a comonomer is exemplified by $\alpha$-olefins such as isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. Other examples of the comonomer include cyclic olefins such as cyclopentene, norbornene, and tetracyclo[6,2,11,8,13,6]-4-dodecene and dienes such as 5-methylene-2-norbornene, 5-ethylidene-2-norbornene, 1,4-hexadiene, 2-methyl-1,4-hexadiene, and 7-methyl-1,6-octadiene.

In the present invention, the polypropylene random copolymer is specifically preferably a propylene/ethylene/1-butene random copolymer or a propylene/ethylene random copolymer from the viewpoint of good foamability.

In the propylene/ethylene/1-butene random copolymer and the propylene/ethylene random copolymer, it is preferred that the structural unit including propylene be contained in an amount of 90% by weight or more and 99.8% by weight or less and the structural unit including 1-butene and/or ethylene be contained in an amount of 0.2% by weight or more and 10% by weight or less in 100% by weight of the polypropylene resin, and it is more preferred that the structural unit including propylene be contained in an amount of 92% by weight or more and 99% by weight or less and the structural unit including 1-butene and/or ethylene be contained in an amount of 1% by weight or more and 8% by weight or less. If containing more than 99.8% by weight of the structural unit including propylene and containing less than 0.2% by weight of the structural unit including 1-butene and/or ethylene, the copolymer is likely to require a higher heated vapor pressure for molding when subjected to in-mold foam molding. If containing less than 90% by weight of the structural unit including propylene and containing more than 10% by weight of the structural unit including 1-butene and/or ethylene, the copolymer is likely to yield an in-mold foam molded body having a lower dimensional stability or a lower compressive strength.

In the propylene/ethylene/1-butene random copolymer, the amount of the structural unit including 1-butene is preferably 6% by weight or less and more preferably 3% by weight or more and 5% by weight or less. If containing more than 6% by weight of the structural unit including 1-butene, the polypropylene random copolymer itself is likely to have lower rigidity and not to satisfy practical rigidity such as compressive strength.

In the propylene/ethylene/1-butene random copolymer and the propylene/ethylene random copolymer, the amount of the structural unit including ethylene is preferably 0.2% by weight or more and 4% by weight or less and more preferably 0.2% by weight or more and 3.5% by weight or less. If the amount of the structural unit including ethylene is less than 0.2% by weight, the heated vapor pressure for molding during in-mold foam molding is likely to increase, whereas if the amount is more than 4% by weight, a product is likely not to satisfy practical rigidity such as compressive strength.

The polypropylene random copolymer used in the present invention preferably has a melting point of 125°C or higher and 155°C or lower, more preferably 130°C or higher and 150°C or lower, and even more preferably 135°C or higher and 148°C or lower. If the melting point of the polypropylene random copolymer is less than 125°C, a resulting in-mold foam molded body is likely to have lower dimensional stability, whereas if the melting point is more than 155°C, the heated vapor pressure for molding during in-mold foam molding is likely to increase.

The polypropylene random copolymer of the present invention may contain the heat ray radiation suppressor described later and other additives, as necessary. The melting point of such a polypropylene random copolymer containing a heat ray radiation suppressor or other additives is regarded as the melting point of the polypropylene random copolymer in the present invention. The melting point of the polypropylene-resin particles used in the present invention can be determined with the differential scanning calorimeter described next and can be regarded as the melting point of the polypropylene random copolymer of the present invention.

Here, the melting point of a polypropylene random copolymer is determined with a differential scanning calorimeter (DSC) [for example, DSC6200 manufactured by Seiko Instruments] by the following procedure. In other words, the temperature of 5 to 6 mg of a polypropylene random copolymer resin is increased from 40°C to 220°C at a temperature increase rate of 10°C/min to melt the resin, then the temperature is decreased from 220°C to 40°C at a temperature decrease rate of 10°C/min to crystallize the resin, and the temperature is increased from 40°C to 220°C at a temperature increase rate of 10°C/min once again. On the DSC curve obtained from such a series of temperature histories, a melting peak temperature in the second temperature increase is regarded as the melting point (Tm in Fig. 2).

The polypropylene random copolymer used in the present invention can have any melt flow rate (hereinafter called "MFR"), but the MFR is preferably 0.5 g/10 min or more and 100 g/10 min or less, more preferably 2 g/10 min or more and 50 g/10 min or less, and even more preferably 3 g/10 min or more and 20 g/10 min or less. A polypropylene random copolymer having a MFR within the range is likely to yield foamed polypropylene-resin particles having a comparatively large expansion ratio. When such particles are subjected to in-mold foam molding, a resulting in-mold foam molded body can have a beautiful surface and a small dimensional shrinkage ratio.

Here, the MFR value is determined with a MFR measurement apparatus described in JIS-K7210 in conditions of an orifice size of $2.0959 \pm 0.005$ mm$\varphi$, an orifice length of $8.000 \pm 0.025$ mm, a load of 2,160 g, and a temperature of $230 \pm 0.2°C$. When a polypropylene random copolymer contains the heat ray radiation suppressor described later or other additives, a MFR of the polypropylene random copolymer containing the heat ray radiation suppressor or other additives is regarded as the MFR of the polypropylene random copolymer in the present invention.

The foamed polypropylene-resin particles used in the present invention can be obtained by processing the polypropylene random copolymer described above into polypropylene-resin particles and then foaming the particles.

The polypropylene-resin particles used in the present invention are prepared as follows: For example, a polypropylene random copolymer is melted with an extruder, a kneader, a Banbury mixer, rolls, or other apparatuses and extruded, for example, into strands; before or after cooling, the strands are processed into a desired particle shape such as a column shape, an elliptical shape, a spherical shape, a cubic shape, and a rectangular parallelepiped shape, giving polypropylene-resin particles.

In the present invention, the polypropylene resin as the substrate resin contains polyethylene glycol and/or glycerin. The polyethylene glycol and/or glycerin helps polypropylene-resin particles to contain water when the polypropylene-resin particles are brought into contact with water or are impregnated with a foaming agent in an aqueous dispersion system. Such particles can have higher foamability and yield foamed polypropylene-resin particles that can be molded even at a low heated vapor pressure for molding and have a wide heat molding condition range.

The polyethylene glycol and/or glycerin is contained in an amount of 0.01% by weight or more and 2% by weight or less and preferably 0.1% by weight or more and 1% by weight or less in 100% by weight of the polypropylene resin.

In the present invention, carbon dioxide gas is used as the foaming agent, and thus an inorganic nucleating agent capable of improving the foamability is preferably added.

The inorganic nucleating agent used in the present invention accelerates the formation of bubble nuclei from which foaming starts to improve the expansion ratio and also contributes to the formation of uniform bubbles. Examples of the inorganic nucleating agent include talc, silica, and calcium carbonate.

In the present invention, the inorganic nucleating agent is preferably added in such an amount that the content is 0.005% by weight or more and 0.5% by weight or less relative to 100% by weight of the polypropylene-resin particles.

The polypropylene-resin particles of the present invention may contain additives such as heat ray radiation suppressors, antioxidants, light resistance improvers, antistatic agents, coloring agents, flame retardancy improvers, and electric conductivity improvers, as necessary, giving polypropylene-resin particles. Water absorbing substances capable of improving the foamability can also be added. In such a case, these additives are typically, preferably added in a melted resin in a production process of polypropylene-resin particles.

The heat ray radiation suppressor used in the present invention can be any substance that suppresses heat conduction by radiation, and is exemplified by carbon black, graphite, activated carbon, titanium oxide, and barium sulfate. These substances may be used singly or in combination of two or more of them. Among them, preferred are carbon black, graphite, activated carbon, and titanium oxide, and more preferred are carbon black and activated carbon, from the viewpoint of radiation suppressive effect.

The carbon black used in the present invention is not limited to particular carbon blacks, and is exemplified by carbon blacks for coloring and electroconductive carbon blacks.

The activated carbon used in the present invention is not limited to particular activated carbons, and is preferably a powdery activated carbon from the viewpoint of dispersibility to the resin. Specifically, powdery activated carbons having a particle size of 0.1 $\mu$m or more and 150 $\mu$m or less and a BET specific surface area of 500 m$^2$/g or more and 2,000 m$^2$/g or less are suitably used.

In the present invention, the heat ray radiation suppressor may be used in any amount, but is preferably added in such an amount that the content is 0.1% by weight or more and 20% by weight or less in 100% by weight of the polypropylene-resin particles. If the heat ray radiation suppressor is added in an amount of less than 0.1% by weight, the radiation suppressive effect is likely to become small, whereas if the heat ray radiation suppressor is added in an amount of more than 20% by weight, the expansion ratio is likely to be difficult to increase.

The water absorbing substance used in the present invention is a substance that can help polypropylene-resin particles to contain water when the substance is added to the polypropylene-resin particles and the polypropylene-resin particles are brought into contact with water or are impregnated with a foaming agent in an aqueous dispersion system.

Examples of the water absorbing substance used in the present invention include water-soluble inorganic substances such as sodium chloride, calcium chloride, magnesium chloride, borax, and zinc borate; hydrophilic polymers such as a special block polymer containing polyether as a hydrophilic segment (trade name: Pelestat; manufactured by Sanyo Chemical Industries, Ltd.), alkali metal salts of ethylene (meth)acrylic acid copolymers, alkali metal salts of butadiene (meth)acrylic acid copolymers, alkali metal salts of carboxylated nitrile rubbers, alkali metal salts of isobutylene-maleic anhydride copolymers, and alkali metal salts of poly(meth)acrylic acids; polyhydric alcohols such as ethylene glycol and pentaerythritol; and triazines such as melamine and isocyanuric acid.

In the present invention, the amount of the water absorbing substance varies with an intended expansion ratio, a foaming agent used, and the type of the water absorbing substance used and is not unequivocally described. When a water-soluble inorganic substance or a polyhydric alcohol is used, the amount is preferably 0.01% by weight or more and 2% by weight or less in 100% by weight of the polypropylene-resin particles. When a hydrophilic polymer is used, the amount is preferably 0.05% by weight or more and 5% by weight or less in 100% by weight of the polypropylene-resin particles.

In the present invention, a coloring agent may be added or may not be added. No coloring agent can be added to yield particles with natural color. Alternatively, for example, a blue, red, or black coloring agent can be added to yield particles with a desired color. Examples of the coloring agent include perylene organic pigments, azo organic pigments, quinacridone organic pigments, phthalocyanine organic pigments, indanthrene organic pigments, dioxazine organic pigments, isoindoline organic pigments, and carbon black.

The foamed polypropylene-resin particles in the present invention can be manufactured by the following procedure: A dispersion liquid containing polypropylene-resin particles and water is placed in a pressure-resistant container; then while the liquid is dispersed under stirring conditions, the temperature is increased higher than a softening temperature of the polypropylene-resin particles in the presence of a foaming agent, and the foaming agent is infiltrated into the polypropylene resin under pressure conditions; and next the dispersion liquid in the pressure-resistant container is discharged into an area having a lower pressure than an internal pressure of the pressure-resistant container, thereby foaming the polypropylene-resin particles. In the present invention, the process is also called "one-step foaming process", and the polypropylene-resin particles obtained by the process are also called "one-step foamed particles".

More specifically, the following methods are exemplified.

(1) Polypropylene-resin particles, an aqueous dispersion medium, as necessary, a dispersant, and other agents are placed in a pressure-resistant container; then, as necessary, the pressure-resistant container is vacuumed; next a foaming agent at 1 MPa·G or more and 2 MPa·G or less is introduced; and the dispersion liquid is heated to a temperature higher than a softening temperature of the polypropylene resin. By the heating, the pressure in the pressure-resistant container is increased to about 2 MPa·G or more and 5 MPa·G or less. As necessary, an additional foaming agent is added around a foaming temperature to adjust an intended foaming pressure; the temperature is further adjusted; then, as necessary, the foaming pressure and temperature are maintained for a predetermined period of time; next, the dispersion liquid is discharged into an area having a lower pressure than an internal pressure of the pressure-resistant container; and consequently foamed polypropylene-resin particles can be obtained.

(2) Polypropylene-resin particles, an aqueous dispersion medium, as necessary, a dispersant, and other agents are placed in a pressure-resistant container; then, as necessary, the pressure-resistant container is vacuumed; a foaming agent is introduced while the dispersion liquid is heated to a temperature higher than a softening temperature of the polypropylene resin; next, the dispersion liquid is discharged into an area having a lower pressure than an internal pressure of the pressure-resistant container; and consequently foamed polypropylene-resin particles can also be obtained.

(3) Polypropylene-resin particles, an aqueous dispersion medium, as necessary, a dispersant, and other agents are placed in a pressure-resistant container; then, the dispersion liquid is heated to around a foaming temperature; a foaming agent is further introduced; the temperature is adjusted to a temperature higher than a softening temperature of the polypropylene resin; the dispersion liquid is discharged into an area having a lower pressure than an internal pressure of the pressure-resistant container; and consequently foamed polypropylene-resin particles can also be obtained.

Before the discharging into a low pressure area, carbon dioxide gas used as the foaming agent or another gas such as nitrogen gas and air can be injected under pressure into the pressure-resistant container to increase the internal pressure of the pressure-resistant container, thereby adjusting the pressure release rate during foaming. In addition, also during the discharging into a low pressure area, carbon dioxide gas used as the foaming agent or another gas such as nitrogen gas and air can be introduced into the pressure-resistant container to control the pressure, thereby adjusting the expansion ratio.

Here, the area having a lower pressure than an internal pressure of the pressure-resistant container preferably has atmospheric pressure. This case requires no complicated apparatus and eliminates the necessity of special pressure adjustment of the low pressure area.

In the present invention, the low pressure area has an atmosphere temperature of higher than 80°C and not higher than 110°C, and more preferably not lower than 90°C and not higher than 100°C. This condition enables a reduction in heat deformation ratio of foamed particles, also enables an improvement in foamability of foamed particles when the particles are heated with heated water vapor, and further enables a reduction of heated water vapor pressure during in-mold foam molding.

If a dispersion liquid is discharged into an area having a lower pressure than an internal pressure of the pressure-resistant container to foam and manufacture polypropylene-resin particles at an atmosphere temperature of the pressure area of 80°C or lower, resulting foamed particles are likely shrunk to give a heat deformation ratio of less than -2%, and are unlikely to give the effect of reducing the heated water vapor pressure during in-mold molding. If the atmosphere temperature is higher than 110°C, resulting foamed particles partially have a small cell film thickness on the surface and cannot maintain the foamability during in-mold molding, and the heated water vapor pressure for molding is likely to be unable to be reduced.

In the present invention, the pressure area heated by heated water vapor is exemplified by a foaming chamber 9 connected through an orifice 5 to a lower part of a pressure-resistant container 3 as shown in Fig. 3.

The temperature in the foaming chamber 9 is maintained by previously blowing steam from a steam inlet 8. The content that includes polypropylene-resin particles 1 and water 2 as the dispersion medium and has been heated to a foaming temperature and maintained at a pressure suited for foaming in the pressure-resistant container 3 is discharged by opening the valve 4 at a lower part of the pressure-resistant container 3 through the orifice 5 into the foaming chamber 9, thereby giving foamed polypropylene-resin particles 7. At the time, the foamed particles 7 are preferably in contact with a high temperature area at higher than 80°C and not higher than 110°C in the foaming chamber 9 for 5 minutes or more.

The pressure-resistant container used for manufacturing the foamed polypropylene-resin particles may be any container that can withstand an internal pressure of the container and a temperature in the container during manufacture of the foamed polypropylene-resin particles, and is exemplified by an autoclave pressure-resistant container.

In the present invention, carbon dioxide gas is used as the foaming agent. The carbon dioxide gas can be used in combination with another foaming agent including an aliphatic hydrocarbon such as propane, n-butane, isobutane, n-pentane, isopentane, and hexane; an alicyclic hydrocarbon such as cyclopentane and cyclobutane; air; nitrogen; or water. Among them, water is particularly preferably used in combination. When water is used in combination as the foaming agent, the water used as the aqueous dispersion medium can be used.

In the present invention, the amount of the foaming agent used is not particularly limited, and an appropriate amount can be used depending on a desired expansion ratio of the foamed polypropylene-resin particles. The amount of the foaming agent used is preferably 3 parts by weight or more and 60 parts by weight or less relative to 100 parts by weight of the polypropylene-resin particles

The aqueous dispersion medium used in the present invention is preferably water, but a dispersion medium containing methanol, ethanol, or a similar solvent can also be used as the aqueous dispersion medium.

In the present invention, in order to improve the dispersibility of a dispersion liquid during manufacture of the foamed polypropylene-resin particles and to prevent the foamed polypropylene-resin particles from adhering with each other, an inorganic dispersant is preferably used. Examples of such an inorganic dispersant include tribasic calcium phosphate, tribasic magnesium phosphate, basic magnesium carbonate, calcium carbonate, basic zinc carbonate, aluminum oxide, iron oxide, titanium oxide, aluminosilicate, kaolin, and barium sulfate.

In the present invention, a dispersion assistant is preferably used in combination in order to further improve the dispersibility. Examples of such a dispersion assistant include sodium dodecylbenzenesulfonate, sodium alkanesulfonate, sodium alkylsulfonate, sodium alkyl diphenyl ether disulfonate, and sodium $\alpha$-propylenesulfonate. Among them, a combination of tribasic calcium phosphate and sodium alkylsulfonate is preferred as the combination of the inorganic dispersant and the dispersion assistant.

In the present invention, the amounts of the inorganic dispersant and the dispersion assistant vary with the types thereof and the type and the amount of a polypropylene resin used. Typically, the inorganic dispersant is preferably used in an amount of 0.2 parts by weight or more and 3 parts by weight or less, and the dispersion assistant is preferably used in an amount of 0.001 parts by weight or more and 0.1 parts by weight or less, relative to 100 parts by weight of water.

In the present invention, the polypropylene-resin particles are typically preferably used in an amount of 20 parts by weight or more and 100 parts by weight or less relative to 100 parts by weight of water in order to improve the dispersibility in water.

The expansion ratio of the foamed polypropylene-resin particles of the present invention is 15 or more and 45 or less, preferably 15 or more and 40 or less, and more preferably 18 or more and 25 or less. Foamed polypropylene-resin particles having an expansion ratio of less than 15 do not require the technique of the present invention. Foamed polypropylene-resin particles having an expansion ratio of more than 45 are likely to cause blocking during manufacture of the foamed polypropylene-resin particles and are likely to cause a foamed molded body obtained by in-mold foam molding to be shrunk.

Here, the expansion ratio of the foamed polypropylene-resin particles is determined as follows: The weight w (g) and the ethanol submergence volume v (cm$^3$) of foamed polypropylene-resin particles are determined; then the true specific gravity, $\rho_b = w/v$, of the foamed particles is calculated; and the expansion ratio $K = \rho_r/\rho_b$ is calculated as the ratio to a density $\rho_r$ of the polypropylene-resin particles before foaming.

The foamed polypropylene-resin particles of the present invention have a heat deformation ratio of -2% or more and +2% or less. Polypropylene foamed particles having a heat deformation ratio of less than -2% or more than +2% are unlikely to give the effect of reducing the heated water vapor pressure for molding during in-mold molding. Such foamed particles are likely to give an in-mold molded body in which some foamed particles are well fused in some moieties but other foamed particles are poorly fused in other moieties. In order to give a fully fused molded body, a higher heated water vapor pressure for molding is required, or gaps are readily generated between particles on the surface of a molded body, in some cases.

Here, the heat deformation ratio of the foamed polypropylene-resin particles is determined by the following procedure. Foamed particles are conditioned in a standard condition at 23°C for 16 hours or more, and an apparent bulk density of the foamed particles before heating is determined. The bulk density is determined as follows: About 200 cc of foamed particles are weighed and placed in a 250-cc graduated cylinder (made of heat-resistant glass); the graduated cylinder is tapped about 20 times so as to eliminate the looseness between the foamed particles; then the volume is measured on the basis of the scale on the graduated cylinder; and the weight is divided by the volume to give a bulk density (g/cc) before heating. Next, the foamed particles in the graduated cylinder are placed in a hot air circulating dryer controlled at a temperature 15°C lower than a melting point of the resin, then are heated for 1 hour, and are taken out. For a case in which foamed particles cause blocking, the foamed particles in the graduated cylinder are once loosened and then allowed to stand at a test site in a standard condition at 23°C for 1 hour, and a bulk density of the foamed particles is determined in the same manner as the above, giving the bulk density of the foamed particles after heating.

The heat deformation ratio is calculated in accordance with the following expression.

$$\text{Heat deformation ratio (\%)} = [(\text{bulk density of foamed particles before heating} - \text{bulk density of foamed particles after heating)/bulk density of foamed particles before heating}] \times 100$$

The amount of the inorganic dispersant adhering to the surface of the foamed polypropylene-resin particles of the present invention is preferably 2,000 ppm or less, more preferably 1,300 ppm or less, and even more preferably 800 ppm or less. Foamed polypropylene-resin particles with the surface to which the inorganic dispersant adheres in an amount of more than 2,000 ppm are likely to have poor fusion properties during in-mold foam molding.

The foamed polypropylene-resin particles of the present invention preferably have two melting peaks on the DSC curve obtained by differential scanning calorimetry measurement, as shown in Fig. 1. Foamed particles having two melting peaks are likely to have good in-mold foam moldability and to give a polypropylene resin in-mold foam molded body having good mechanical strength and good heat resistance.

Here, the DSC curve obtained by differential scanning calorimetry measurement of foamed polypropylene-resin particles is a DSC curve obtained when the temperature of 3 to 6 mg of foamed particles is increased from 40°C to 220°C at a temperature increase rate of 10°C/min with a differential scanning calorimeter.

As described above, the foamed polypropylene-resin particles having two melting peaks can be easily obtained by setting the temperature in a pressure-resistant container during foaming to an appropriate value. In other words, in the case of the present invention, the foamed polypropylene-resin particles having two melting peaks are likely to be obtained typically by setting the temperature of a pressure-resistant container to a temperature equal to or higher than the softening temperature of a polypropylene resin that is a substrate resin, preferably a temperature equal to or higher than the melting point thereof, more preferably a temperature equal to or higher than a temperature 5°C higher than the melting point thereof and to a temperature lower than the melting completion temperature thereof, preferably a temperature 2°C lower than the melting completion temperature thereof.

The melting completion temperature is determined as follows: With a differential scanning calorimeter, the temperature of 3 to 6 mg of polypropylene-resin particles is increased from 40°C to 220°C at a temperature increase rate of 10°C/min, then the temperature is decreased to 40°C at a temperature decrease rate of 10°C/min, and the temperature is increased to 220°C at a temperature increase rate of 10°C/min once again, giving a DSC curve. The temperature at which the tail of the melting peak on the DSC curve is returned to the base line at a high temperature side is regarded as the melting completion temperature.

Of the two melting peaks, the melting peak at a high temperature side preferably has a heat quantity (hereinafter also expressed as Qh) of 5 to 40 J/g and more preferably 7 to 30 J/g. If the Qh is less than 5 J/g, the foamed polypropylene-resin particles are likely to have a low closed cell ratio (closed cell ratio determined in accordance with JIS K7138: 2006), whereas if the Qh is more than 40 J/g, the foamed polypropylene-resin particles are likely to have poor fusion properties when giving a polypropylene resin in-mold foam molded body.

As shown in Fig. 1, the heat quantity Qh of the melting peak at the high temperature side is determined as follows: Between two melting peaks on the DSC curve, the point having a minimum endothermic quantity is regarded as point A. From the point A, tangent lines are drawn with respect to the DSC curve. Of the areas surrounded by the tangent lines and the DSC curve (the shaded areas in Fig. 1), one area at the high temperature side is regarded as a heat quantity Qh of the melting peak at the high temperature side, and the other area at the low temperature side is regarded as a heat quantity Ql of the melting peak at the low temperature side.

In the present invention, a high-temperature heat quantity ratio (hereinafter also called DSC peak ratio) is the ratio of a heat quantity Qh of the melting peak at the high temperature side relative to the total heat quantity of a heat quantity Qh of the melting peak at the high temperature side and a heat quantity Ql of the melting peak at the low temperature side (high-temperature heat quantity ratio (%) = (Qh/(Qh + Ql) $\times$ 100). The high-temperature heat quantity ratio is preferably 10% or more and 40% or less and more preferably 15% or more and 30% or less. If the high-temperature heat quantity ratio is within the range, foamed polypropylene-resin particles having a high expansion ratio can be readily obtained by a single foaming process while the resulting foamed polypropylene-resin particles do not cause blocking.

The high-temperature heat quantity ratio and the heat of fusion at a high temperature side can be appropriately adjusted, for example, by holding time from the completion of temperature increase to foaming in a one-step foaming process (holding time after the temperature substantially reaches a foaming temperature until foaming), foaming temperature (temperature during foaming), and foaming pressure (pressure during foaming). Generally, a longer holding time, a lower foaming temperature, or a lower foaming pressure is likely to lead to a larger high-temperature heat quantity ratio or a larger heat of fusion at a high temperature side. From the above, a condition giving a desired high-temperature heat quantity ratio and a desired heat quantity of the melting peak at a high temperature side can be easily found by repeating several experiments in which the holding time, the foaming temperature, and the foaming pressure are systematically, appropriately changed. The foaming pressure can be adjusted by the amount of a foaming agent.

In the present invention, the polypropylene foamed particles having a heat deformation ratio of -2% or more and +2% or less can be easily obtained, for example, by combining the following manufacture conditions.

(1) In a one-step foaming process, polypropylene-resin particles impregnated with a foaming agent are foamed in a heated low pressure area such as a heated water vapor atmosphere.
(2) Polyethylene glycol and/or glycerin is contained in an amount of 0.01% by weight or more and 2% by weight or less in 100% by weight of the polypropylene-resin particles.
(3) As the foaming agent, 3 parts by weight or more and 60 parts by weight or less of carbon dioxide gas is used relative to 100 parts by weight of the polypropylene resin.
(4) The atmosphere temperature of the heated low pressure area is set at higher than 80°C and not higher than 110°C.

The foamed polypropylene-resin particles of the present invention preferably have an average bubble size of 50 $\mu$m or more and 400 $\mu$m or less and more preferably 90 $\mu$m or more and 300 $\mu$m or less. Foamed polypropylene-resin particles having an average bubble size of less than 50 $\mu$m are likely to give an in-mold foam molded body with a poor surface appearance, whereas foamed polypropylene-resin particles having an average bubble size of more than 400 $\mu$m may invite lower strength.

The foamed polypropylene-resin particles of the present invention preferably have a particle weight of 0.5 mg/particle or more and 1.8 mg/particle or less and more preferably 0.7 mg/particle or more and 1.2 mg/particle or less. The particle weight of foamed polypropylene-resin particles can be easily adjusted within the range by adjusting the particle weight of polypropylene-resin particles to 0.5 mg/particle or more and 1.8 mg/particle or less.

The polypropylene-resin particles in the present invention can be obtained, as described above, by extruding a once melted resin into strands and, before or after cooling the strands, processing the strands into a desired particle shape such as a column shape, an elliptical shape, a spherical shape, a cubic shape, and a rectangular parallelepiped shape. Polypropylene-resin particles having a particle weight of less than 0.5 mg/particle would have a large variation in particle weight, and resulting foamed polypropylene-resin particles are likely to have a large variation in expansion ratio. Meanwhile, polypropylene-resin particles having a particle weight of more than 1.8 mg/particle are likely to give foamed particles that fail to be filled into small areas.

The in-mold foam molded bodies obtained by in-mold foam molding of the foamed polypropylene-resin particles of the present invention can be used for heat insulating materials, shock absorbing packing materials, automobile interior members, core materials for automobile bumpers, and various purposes.

Examples

The present invention will next be described in detail with reference to examples, but the present invention is not limited to them.

The following substances were used in examples and comparative examples.

Polypropylene resin:

- Polypropylene resin A [a propylene/ethylene random copolymer contains ethylene in an amount of 2.9% by weight, a melt index of 7 g/10 min, a melting point of 144°C]
- Polypropylene resin B [a propylene/ethylene random copolymer contains ethylene in an amount of 3.6% by weight, a melt index of 7 g/10 min, a melting point of 139°C]

Cell nucleating agent:

- Talc [manufactured by Hayashi-Kasei Co., Ltd., PK-S]

Others:

- Polyethylene glycol [manufactured by Lion Corporation, PEG #300]
- Melamine [manufactured by Mitsui Chemicals, Inc.]

In the examples, measurement and evaluation were carried out by the following procedure.

<Measurement of melting point of polypropylene resin with differential scanning calorimeter>

With a differential scanning calorimeter (DSC) [manufactured by Seiko Instruments, model DSC6200], the temperature of 3 to 6 mg of polypropylene-resin particles was increased from 20°C to 220°C at a temperature increase rate of 10°C/min, then the temperature was decreased from 220°C to 20°C at a temperature decrease rate of 10°C/min, and the temperature was increased from 20°C to 220°C at a temperature increase rate of 10°C/min. On the DSC curve obtained, the melting peak temperature in the second temperature increase was regarded as the melting point (see Fig. 2).

<DSC measurement of foamed polypropylene-resin particles>

With a differential scanning calorimeter (DSC) [manufactured by Seiko Instruments, model DSC6200], the temperature of 3 to 6 mg of foamed polypropylene-resin particles was increased from 20°C to 220°C at a temperature increase rate of 10°C/min. From the DSC curve obtained in the first temperature increase, each melting peak temperature or the heat of fusion was determined (see Fig. 1).

<Expansion ratio of foamed particles>

The weight w (g) and the ethanol submergence volume v ($cm^3$) of foamed polypropylene-resin particles having a bulk volume of about 50 $cm^3$ were determined, and the expansion ratio was calculated in accordance with the following expression by referring to the density, d = 0.9 ($g/cm^3$), of polypropylene-resin particles before foaming.

$$\text{Expansion ratio} = d \times v/w$$

<Average bubble size of foamed particles>

Ten particles were randomly selected from foamed particles and were cut with sufficient care so as not to break the cell films. The cut section of each sample was observed under a microscope. A line segment corresponding to a length of 1 mm was drawn except the surface layer part. The number of bubbles through which the line segment passed was counted, and then the average bubble size was determined in accordance with ASTM D3576.

<Heat deformation ratio of foamed particles>

Obtained foamed particles are conditioned in a standard condition at 23°C for 16 hours or more, and then an apparent bulk density of the foamed particles before heating is determined.

The bulk density is determined as follows: About 200 cc of foamed particles are weighed and placed in a 250-cc graduated cylinder [SCHOTT, made of DURAN borosilicate glass]; the graduated cylinder is tapped about 20 times so as to eliminate the looseness between the foamed particles; then the volume is measured on the basis of the scale on the graduated cylinder; and the weight is divided by the volume to give a bulk density (g/cc) before heating.

The foamed particles in the graduated cylinder are placed in a hot air circulating dryer [manufactured by Nagano Science Co., Ltd., CH40-15P] controlled at a temperature 15°C lower than a melting point of the resin, then are heated for 1 hour, and are taken out. For a case in which foamed particles cause blocking, the foamed particles in the graduated cylinder are once loosened and then allowed to stand at a test site in a standard condition at 23°C for 1 hour, and a bulk density of the foamed particles is determined in the same manner as the above, giving the bulk density of the foamed particles after heating.

The heat deformation ratio is calculated in accordance with the following expression.

$$\text{Heat deformation ratio (\%)} = [(\text{bulk density of foamed particles before heating} - \text{bulk density of foamed particles after heating})/\text{bulk density of foamed particles before heating}] \times 100$$

<Evaluation of molded body>

By using a polypropylene foam molding machine [manufactured by DAISEN Co., Ltd., KD-345] and a mold having a length of 400 mm, a width of 300 mm, and a thickness of 50 mm, in-mold foam molding was carried out while the heated water vapor pressure for molding was changed by 0.01 MPa·G between 0.16 MPa·G and 0.32 MPa·G. The obtained polypropylene resin in-mold foam molded body was allowed to stand at room temperature for 1 hour, and then was dried and aged in a thermostatic chamber at 75°C for 15 hours. The molded body was taken out in a condition at room temperature and allowed to stand at room temperature for 4 hours. The following fusion properties between foamed particles, the surface nature of the in-mold foam molded body, the density of the molded body, and the 50% compressive strength were evaluated. A minimum heated vapor pressure for molding at which in-mold foam molding yielded such an in-mold foam molded body that all the fusion properties, the surface nature, and the 50% compressive strength were accepted (evaluated as "○") was regarded as the minimum heated water vapor pressure for molding.

(1) Evaluation of fusion properties

The obtained polypropylene resin in-mold foam molded body was cut in a thickness direction of the in-mold foam molded body with a cutter knife to make an incision with a size of about 5 to 10 mm, and the in-mold foam molded body was broken from the incision by hand. The broken-out section was observed, and the ratio of broken particles but not particles broken along interfaces was determined. The fusion properties were evaluated on the basis of the following criteria.

Acceptance "○": the ratio of broken particles is not less than 60%.
Failure "×": the ratio of broken particles is less than 60%.

(2) Evaluation of surface nature

The surface conditions of the obtained polypropylene resin in-mold foam molded body were visually observed, and the surface nature was evaluated on the basis of the following criteria.

Acceptance "○": the surface is beautiful with a few wrinkles or gaps between particles.
Failure "×": the surface has a poor appearance with wrinkles and sink marks.

(3) Density of in-mold foam molded body

From the obtained polypropylene resin in-mold foam molded body, a test piece having a length of 50 mm, a width of 50 mm, and a thickness of 25 mm was cut out. The density p of the test piece was calculated from a weight W (g) and a volume V (cm$^3$) of the test piece in accordance with the following expression.

$$\text{Density } \rho \text{ (g/L) of in-mold foam molded body} = (\text{W/V}) \times 1000$$

(4) 50% Compressive strength

From the obtained polypropylene resin in-mold foam molded body, a test piece having a length of 50 mm, a width of 50 mm, and a thickness of 25 mm was cut out. The test piece was compressed by 50% at a rate of 10 mm/min in accordance with NDA-Z0504, and the compressive stress (MPa) was measured.

The evaluation was carried out relative to a density p of the in-mold foam molded body on the basis of the following criteria.

Acceptance "○": the 50% compressive strength is not less than $0.0069 \times p + 0.0162$ MPa.
Failure "×": the 50% compressive strength is less than $0.0069 \times \rho + 0.0162$ MPa.

(Example 1)

[Manufacture of polypropylene-resin particles]

With 100 parts by weight of polypropylene resin A (a propylene/ethylene random copolymer contained ethylene in an amount of 2.9% by weight, a melt index of 7 g/10 min, a melting point of 144°C), 0.05 parts by weight of talc as a cell nucleating agent and 0.50 parts by weight of polyethylene glycol as a water absorbing agent were blended. The mixture was then melted and kneaded at a resin temperature of 220°C in a 50-mmφ single screw extruder [manufactured by Osaka Seiki Kosaku, model 20VSE-50-28]. The obtained melted, kneaded resin was extruded through a circular die into strands. The strands were cooled with water and then cut with a pelletizer, giving polypropylene-resin particles having a cylindrical shape and having a particle weight of 1.2 mg/particle.

[Manufacture of foamed polypropylene-resin particles]

An apparatus including a foaming chamber 9, as shown in Fig. 3, connected through an orifice 5 to a lower part of a pressure-resistant autoclave (pressure-resistant container 3) having a capacity of 10 L was used to manufacture foamed polypropylene-resin particles.

In a pressure-resistant autoclave having a capacity of 10 L, 100 parts by weight of the obtained polypropylene-resin particles, 170 parts by weight of water, 1.0 part by weight of tribasic calcium phosphate as a dispersant, and 0.07 parts by weight of sodium n-paraffinsulfonate as a dispersion assistant were placed. Under stirring, 6.0 parts by weight of carbon dioxide gas was added as a foaming agent. The temperature of the contents in the autoclave was increased to a foaming temperature of 150°C, and then carbon dioxide gas was further added to adjust the autoclave internal pressure to 3.0 MPa·G. The conditions were maintained for 30 minutes, and then a valve 4 at a lower part of the autoclave was opened. Through the 3.6-mmφ open orifice 5, the contents in the autoclave were discharged into the foaming chamber 9 under atmospheric pressure, giving one-step foamed particles. At a position right behind the orifice 5 in the foaming chamber 9, a steam inlet 8 was provided and designed so that steam heating increased the atmosphere temperature in the foaming chamber 9 to 98°C and foamed particles came in contact with the steam heat for 5 minutes. The obtained one-step foamed particles had an expansion ratio of 20, a DSC peak ratio of 19%, and a heat deformation ratio of -0.1% at 129°C, which was calculated by subtracting 15°C from 144°C, the melting point of the resin.

[Manufacture of polypropylene resin in-mold foam molded body]

The obtained foamed polypropylene-resin particles were washed with an aqueous hydrochloric acid solution having a pH of 1, then washed with water, and dried at 75°C. The dried particles were impregnated with pressurized air in a pressure-resistant container for two-step foaming that differed from the above pressure-resistant autoclave to adjust the particle internal pressure to 0.2 MPa·G. By using a polypropylene foam molding machine [manufactured by DAISEN Co., Ltd., KD-345] and a mold having a length of 400 mm, a width of 300 mm, and a thickness of 50 mm, in-mold foam molding was carried out while the heated water vapor pressure was changed by 0.01 MPa·G between 0.16 and 0.32 MPa·G. The heating time for this molding was 22 seconds (forward heating/reverse heating/main heating = 5 seconds/5 seconds/12 seconds). The obtained in-mold foam molded body was allowed to stand at room temperature for 1 hour, and then was dried and aged in a thermostatic chamber at 75°C for 15 hours. The molded body was taken out in a condition at room temperature and allowed to stand at room temperature for 4 hours, and then the fusion properties between particles, the surface nature, and the 50% compressive strength were determined. From these results, the minimum heated water vapor pressure for molding was 0.21 MPa·G. In the whole range from the minimum heated water vapor pressure to a high heated water vapor pressure of 0.32 MPa·G, the fusion properties, the surface nature, and the 50% compressive strength were acceptance. The results are shown in Table 1.

(Example 2)

One-step foamed particles and an in-mold foam molded body were obtained in the same manner as in Example 1 except that the increased temperature (foaming temperature) of the contents in the autoclave was changed to 149°C in [Manufacture of foamed polypropylene-resin particles]. The obtained one-step foamed particles had an expansion ratio of 18, a DSC peak ratio of 29%, and a heat deformation ratio of 0.0%. The minimum heated water vapor pressure for molding was 0.22 MPa·G, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

(Example 3)

[Manufacture of polypropylene-resin particles]

Polypropylene-resin particles were obtained in the same manner as in Example 1 except that with 100 parts by weight of polypropylene resin B (a propylene/ethylene random copolymer contained ethylene in an amount of 3.6% by weight, a melt index of 7 g/10 min, a melting point of 139°C), 0.10 parts by weight of talc as a cell nucleating agent and 0.50 parts by weight of polyethylene glycol as a water absorbing agent were blended.

[Manufacture of foamed polypropylene-resin particles]

One-step foamed particles and an in-mold foam molded body were obtained in the same manner as in Example 1 except that the obtained polypropylene-resin particles were used and the increased temperature (foaming temperature) of the contents in the autoclave was changed to 136°C. The obtained one-step foamed particles had an expansion ratio of 20, a DSC peak ratio of 20%, and a heat deformation ratio of -1.0% at 124°C, which was calculated by subtracting 15°C from 139°C, the melting point of the resin.

[Manufacture of polypropylene resin in-mold foam molded body]

In-mold foam molding was carried out in the same manner as in Example 1, and the moldability and the resulting molded body were evaluated. The minimum heated water vapor pressure for molding was 0.18 MPa·G, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

(Example 4)

One-step foamed particles and an in-mold foam molded body were obtained in the same manner as in Example 3 except that the increased temperature (foaming temperature) of the contents in the autoclave was changed to 135°C in [Manufacture of foamed polypropylene-resin particles]. The obtained one-step foamed particles had an expansion ratio of 19, a DSC peak ratio of 28%, and a heat deformation ratio of 1.6%. The minimum heated water vapor pressure for molding was 0.19 MPa·G when the in-mold foam molded body was produced, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

(Example 5)

[Manufacture of polypropylene-resin particles]

Polypropylene-resin particles and an in-mold foam molded body were obtained in the same manner as in Example 1 except that with 100 parts by weight of polypropylene resin A (a propylene/ethylene random copolymer contained ethylene in an amount of 2.9% by weight, a melt index of 7 g/10 min, a melting point of 144°C), 0.05 parts by weight of talc as a cell nucleating agent and 0.20 parts by weight of glycerin as a water absorbing agent were blended. The obtained one-step foamed particles had an expansion ratio of 19, a DSC peak ratio of 22%, and a heat deformation ratio of -0.2%. The minimum heated water vapor pressure for molding was 0.22 MPa·G when the in-mold foam molded body was produced, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

(Example 6)

One-step foamed particles and an in-mold foam molded body were obtained in the same manner as in Example 5 except that the increased temperature (foaming temperature) of the contents in the autoclave was changed to 149°C in [Manufacture of foamed polypropylene-resin particles]. The obtained one-step foamed particles had an expansion ratio of 18, a DSC peak ratio of 29%, and a heat deformation ratio of 0%. The minimum heated water vapor pressure for molding was 0.22 MPa·G when the in-mold foam molded body was produced, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

(Example 7)

One-step foamed particles and an in-mold foam molded body were obtained in the same manner as in Example 5 except that the autoclave internal pressure was changed to 3.5 MPa·G when carbon dioxide gas was further added in [Manufacture of foamed polypropylene-resin particles]. The obtained one-step foamed particles had an expansion ratio of 25, a DSC peak ratio of 17%, and a heat deformation ratio of -1.1%. The minimum heated water vapor pressure for molding was 0.22 MPa·G when the in-mold foam molded body was produced, and in the whole heated water vapor pressure range from the minimum heated water vapor pressure to a high heated water vapor pressure of 0.32 MPa·G, the fusion properties, the surface nature, and the 50% compressive strength were acceptance. The results are shown in Table 1.

[Table 1]

| | | | Example | | | | | | |
|---|---|---|---|---|---|---|---|---|---|
| | | | 1 | 2 | 3 | 4 | 5 | 6 | 7 |
| Polypropylene resin A | | parts by weight | 100 | 100 | — | — | 100 | 100 | 100 |
| Polypropylene resin B | | parts by weight | — | — | 100 | 100 | — | — | — |
| Talc | | parts by weight | 0.05 | 0.05 | 0.10 | 0.10 | 0.05 | 0.05 | 0.05 |
| Polyethylene glycol | | parts by weight | 0.50 | 0.50 | 0.50 | 0.50 | — | — | — |
| Glycerin | | parts by weight | — | — | — | — | 0.20 | 0.20 | 0.20 |
| Melamine | | parts by weight | — | — | — | — | — | — | — |
| Foamed particles | Foaming agent | — | $CO_2$ | $CO_2$ | $CO_2$ | $CO_2$ | $CO_2$ | $CO_2$ | $CO_2$ |
| | Foaming temperature | °C | 150 | 149 | 136 | 135 | 150 | 149 | 150 |
| | Autoclave internal pressure | MPa·G | 3.0 | 3.0 | 3.0 | 3.0 | 3.0 | 3.0 | 3.5 |
| | Temperature in foaming chamber | °C | 98 | 98 | 98 | 98 | 98 | 98 | 98 |
| | Expansion ratio | — | 20 | 18 | 20 | 19 | 19 | 18 | 25 |
| | Average bubble size | μm | 201 | 170 | 210 | 195 | 165 | 156 | 160 |
| | DSC peak ratio | % | 19 | 29 | 20 | 28 | 22 | 29 | 17 |
| | Heat deformation ratio | % | −0.1 | −0.0 | −1.0 | 1.6 | −0.2 | 0.0 | −1.1 |
| In-mold foam molded body | Molded body density | g/L | 26.2 | 29.3 | 26.7 | 28.1 | 27.1 | 28.8 | 22.1 |
| | Surface nature | — | ○ | ○ | ○ | ○ | ○ | ○ | ○ |
| | Minimum heated water vapor pressure for molding | MPa·G | 0.21 | 0.22 | 0.18 | 0.19 | 0.22 | 0.22 | 0.22 |
| | 50% Compressive strength | — | ○ | ○ | ○ | ○ | ○ | ○ | ○ |
| | Fusion properties | — | ○ | ○ | ○ | ○ | ○ | ○ | ○ |

(Comparative Example 1)

One-step foamed particles were obtained in the same manner as in Example 1 except that the contents in the autoclave were discharged through the open orifice without steam heating in the foaming chamber 9 (the temperature in the foaming chamber 9 was 45°C) in [Manufacture of foamed polypropylene-resin particles].

The obtained one-step foamed particles had an expansion ratio of 15 and a DSC peak ratio of 21%.

An internal pressure of 0.28 MPa·G was applied into the obtained one-step foamed particles by air impregnation, and the particles were heated by a steam at 0.02 MPa·G, giving foamed particles having an expansion ratio of 21. The heat deformation ratio was -15.5% at 129°C, which was calculated by subtracting 15°C from 144°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 1-1. The minimum heated water vapor pressure for molding was determined to be 0.25 MPa·G from the fusion properties between particles in the molded body, the surface nature, and the 50% compressive strength. The evaluation results at 0.21 MPa·G, which was the minimum heated water vapor pressure for molding in Example 1, are shown as Comparative Example 1-2. The fusion ratio and the surface nature were failed.

It is revealed that in Example 1, the minimum heated water vapor pressure for molding was able to be reduced because the foamed particles used had a heat deformation ratio of around 0.

(Comparative Example 2)

One-step foamed particles were obtained in the same manner as in Example 2 except that the contents in the autoclave were discharged through the open orifice without steam heating in the foaming chamber 9 (the temperature in the foaming chamber 9 was 45°C) in [Manufacture of foamed polypropylene-resin particles].

The obtained one-step foamed particles had an expansion ratio of 15 and a DSC peak ratio of 30%. An internal pressure of 0.28 MPa·G was applied into the obtained one-step foamed particles by air impregnation, and the particles were heated by a steam at 0.02 MPa·G, giving foamed particles having an expansion ratio of 18. The heat deformation ratio was -9.5% at 129°C, which was calculated by subtracting 15°C from 144°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 2-1. The minimum heated water vapor pressure for molding was determined to be 0.26 MPa·G from the fusion properties between particles in the molded body, the surface nature, and the 50% compressive strength.

The evaluation results at 0.22 MPa·G, which was the minimum heated water vapor pressure for molding in Example 2, are shown as Comparative Example 2-2. All the fusion ratio, the surface nature, and the 50% compressive strength were failed. It is revealed that in Example 2, the minimum heated water vapor pressure for molding was able to be reduced because the foamed particles used had a heat deformation ratio of around 0.

(Comparative Example 3)

One-step foamed particles were obtained in the same manner as in Example 3 except that the contents in the autoclave were discharged through the open orifice without steam heating in the foaming chamber 9 (the temperature in the foaming chamber 9 was 45°C) in [Manufacture of foamed polypropylene-resin particles]. The obtained one-step foamed particles had an expansion ratio of 14 and a DSC peak ratio of 21%. An internal pressure of 0.28 MPa·G was applied into the obtained one-step foamed particles by air impregnation, and the particles were heated by a steam at 0.02 MPa·G, giving foamed particles having an expansion ratio of 20. The heat deformation ratio was -7.0% at 124°C, which was calculated by subtracting 15°C from 139°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 3-1. The minimum heated water vapor pressure for molding was determined to be 0.22 MPa·G from the fusion properties between particles in the molded body, the surface nature, and the 50% compressive strength.

The results at 0.18 MPa·G, which was the minimum heated water vapor pressure for molding in Example 3, are shown as Comparative Example 3-2. The fusion ratio, the surface nature, and the 50% compressive strength were failed. It is revealed that in Example 3, the minimum heated water vapor pressure for molding was able to be reduced because the foamed particles used had a heat deformation ratio of around 0.

(Comparative Example 4)

[Manufacture of polypropylene-resin particles]

Polypropylene-resin particles were obtained in the same manner as in Example 1 except that with 100 parts by weight of polypropylene resin A, 0.5 parts by weight of talc [manufactured by Hayashi-Kasei Co., Ltd., PK-S] as a cell nucleating agent alone was blended.

[Manufacture of foamed polypropylene-resin particles]

In a pressure-resistant autoclave having a capacity of 10 L, 100 parts by weight of the obtained polypropylene-resin particles, 170 parts by weight of water, 1.0 part by weight of tribasic calcium phosphate as a dispersant, and 0.07 parts by weight of sodium n-paraffinsulfonate as a dispersion assistant were placed. Under stirring, isobutane was added as the foaming agent. The temperature of the contents in the autoclave was increased to a foaming temperature of 135°C, and then isobutane was further added to adjust the autoclave internal pressure to 2.4 MPa·G. The conditions were maintained for 30 minutes, and then the valve at a lower part of the autoclave was opened. Through the 3.6-mmφ open orifice, the contents in the autoclave were discharged into an atmosphere without steam heating under atmospheric pressure, giving one-step foamed particles. The obtained one-step foamed particles had an expansion ratio of 20 and a DSC peak ratio of 19%. The heat deformation ratio was -4.5% at 129°C, which was calculated by subtracting 15°C from 144°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 4-1. The minimum heated water vapor pressure for molding was determined to be 0.26 MPa·G from the fusion properties between particles in the molded body, the surface nature, and the 50% compressive strength.

The evaluation results at 0.21 MPa·G, which was the minimum heated water vapor pressure for molding in Example 1, are shown as Comparative Example 4-2. The fusion ratio and the surface nature were failed. It is revealed that in Example 1, the minimum heated water vapor pressure for molding was able to be reduced because the foamed particles used had a heat deformation ratio of around 0.

(Comparative Example 5)

[Manufacture of polypropylene-resin particles]

Polypropylene-resin particles were obtained in the same manner as in Example 1 except that with 100 parts by weight of polypropylene resin A, 0.5 parts by weight of talc [manufactured by Hayashi-Kasei Co., Ltd., PK-S] as a cell nucleating agent and 0.5 parts by weight of melamine [manufactured by Mitsui Chemicals, Inc.] were blended.

[Manufacture of foamed polypropylene-resin particles]

One-step foamed particles were obtained in the same manner as in Example 1 except that the obtained polypropylene-resin particles were used, the increased temperature (foaming temperature) of the contents in the autoclave was changed to 152°C, and the contents in the autoclave were discharged through the open orifice without steam heating in the foaming chamber 9 (the temperature in the foaming chamber 9 was 45°C).

The obtained one-step foamed particles had an expansion ratio of 15 and a DSC peak ratio of 22%. An internal pressure of 0.28 MPa·G was applied into the obtained one-step foamed particles by air impregnation, and the particles were heated by a steam at 0.02 MPa-G, giving foamed particles having an expansion ratio of 19. The heat deformation ratio was -12.0% at 129°C, which was calculated by subtracting 15°C from 144°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 5-1. The minimum heated water vapor pressure for molding was determined to be 0.26 MPa·G from the fusion properties between particles in the molded body, the surface nature, and the 50% compressive strength.

The evaluation results at 0.21 MPa·G, which was the minimum heated water vapor pressure for molding in Example 1, are shown as Comparative Example 5-2. The fusion ratio and the surface nature were failed. It is revealed that in Example 1, the minimum heated water vapor pressure for molding was able to be reduced because the foamed particles obtained by using carbon dioxide gas as the foaming agent and having a heat deformation ratio of around 0 were used.

(Comparative Example 6)

[Manufacture of polypropylene-resin particles]

Polypropylene-resin particles were obtained in the same manner as in Example 1 except that with 100 parts by weight of polypropylene resin A, 0.5 parts by weight of talc [manufactured by Hayashi-Kasei Co., Ltd., PK-S] as a cell nucleating agent and 0.5 parts by weight of melamine [manufactured by Mitsui Chemicals, Inc.] were blended.

[Manufacture of foamed polypropylene-resin particles]

In a pressure-resistant autoclave having a capacity of 10 L, 100 parts by weight of the obtained polypropylene-resin particles, 170 parts by weight of water, 1.0 part by weight of tribasic calcium phosphate as a dispersant, and 0.07 parts by weight of sodium n-paraffinsulfonate as a dispersion assistant were placed. Under stirring, the contents in the autoclave were heated to 154°C. The autoclave internal pressure was then increased by compressed air to a container internal pressure of 2.8 MPa·G. The autoclave was maintained at the container internal temperature for 30 minutes, and then the valve 4 at a lower part of the autoclave was opened. Through the 3.6-mmφ open orifice 5, the contents in the autoclave were discharged into the foaming chamber 9 under atmospheric pressure, giving one-step foamed particles. At a position right behind the orifice 5 in the foaming chamber 9, a steam inlet 8 was provided and designed so that steam heating increased the atmosphere temperature in the foaming chamber 9 to 98°C and foamed particles came in contact with the steam heat for 5 minutes. Comparative Example 6 relates to the technique using water as the foaming agent described in JP-A No. 2004-67768.

The obtained one-step foamed particles had an expansion ratio of 20, a DSC peak ratio of 21%, and a heat deformation ratio of -6.7% at 129°C, which was calculated by subtracting 15°C from 144°C, the melting point of the resin.

[Manufacture of polypropylene resin in-mold foam molded body]

In-mold foam molding was carried out in the same manner as in Example 1, and the moldability and the resulting molded body were evaluated. The results are shown in Table 2 as Comparative Example 6-1. The minimum heated water vapor pressure for molding was determined to be 0.26 MPa·G from the fusion properties between particles in the molded body, the surface nature, and the 50% compressive strength.

The evaluation results at 0.21 MPa·G, which was the minimum heated water vapor pressure for molding in Example 1, are shown as Comparative Example 6-2. The fusion ratio and the surface nature were failed.

It is revealed that in Example 1, the minimum heated water vapor pressure for molding was able to be reduced because the foamed particles obtained by using carbon dioxide gas as the foaming agent and having a heat deformation ratio of around 0 were used.

Reference Signs List

EP 2 966 119 B1

[Table 2]

| | | | Comparative Example | | | | | | | | | | | |
|---|---|---|---|---|---|---|---|---|---|---|---|---|---|---|
| | | | 1-1 | 1-2 | 2-1 | 2-2 | 3-1 | 3-2 | 4-1 | 4-2 | 5-1 | 5-2 | 6-1 | 6-2 |
| Polypropylene resin A | | parts by weight | 100 | | 100 | | — | | 100 | | 100 | | 100 | |
| Polypropylene resin B | | parts by weight | — | | — | | 100 | | — | | — | | — | |
| Talc | | parts by weight | 0.05 | | 0.05 | | 0.10 | | 0.50 | | 0.50 | | 0.50 | |
| Polyethylene glycol | | parts by weight | 0.50 | | 0.50 | | 0.50 | | — | | — | | — | |
| Melamine | | parts by weight | — | | — | | — | | — | | 0.50 | | 0.50 | |
| Foamed particles | Foaming agent | — | $CO_2$ | | $CO_2$ | | $CO_2$ | | Butane | | $CO_2$ | | Water(air) | |
| | Foaming temperature | °C | 150 | | 149 | | 136 | | 135 | | 152 | | 154 | |
| | Autoclave internal pressure | MPa·G | 3.0 | | 3.0 | | 3.0 | | 2.4 | | 3.0 | | 2.8 | |
| | Temperature in foaming chamber | °C | — | | — | | — | | — | | — | | 98 | |
| | Expansion ratio | — | 21 | | 18 | | 20 | | 20 | | 19 | | 20 | |
| | Average bubble size | μm | 220 | | 199 | | 195 | | 260 | | 190 | | 195 | |
| | DSC peak ratio | % | 21 | | 30 | | 21 | | 19 | | 22 | | 21 | |
| | Heat deformation ratio | % | −15.5 | | −9.5 | | −7.0 | | −4.5 | | −12.0 | | −6.7 | |
| In-mold foam molded body | Molded body density | g/L | 24.6 | 24.5 | 29.8 | 29.9 | 26.3 | 26.2 | 26.3 | 26.4 | 28.0 | 28.5 | 26.2 | 26.3 |
| | Surface nature | — | ○ | × | ○ | × | ○ | × | ○ | × | ○ | × | ○ | × |
| | Heated water vapor pressure for molding | MPa·G | 0.25 | 0.21 | 0.26 | 0.22 | 0.22 | 0.18 | 0.26 | 0.21 | 0.26 | 0.21 | 0.26 | 0.21 |
| | 50% Compressive strength | — | ○ | ○ | ○ | × | ○ | × | ○ | ○ | ○ | ○ | ○ | ○ |
| | Fusion properties | — | ○ | × | ○ | × | ○ | × | ○ | × | ○ | × | ○ | × |

20

1      Polypropylene-resin particles
2      Aqueous dispersion medium
3      Pressure-resistant container (autoclave)
4      Valve
5      Orifice
6      Thermograph
7      Foamed particle
8      Steam inlet
9      Foaming chamber

## Claims

**1.** A method for manufacturing foamed polypropylene-resin particles by a single foaming process, the foamed polypropylene-resin particles having a heat deformation ratio of -2% or more and +2% or less, the heat deformation ratio being a ratio of change in apparent bulk density before and after heating at a temperature 15°C lower than a melting point of a polypropylene resin as a substrate resin, wherein the polypropylene resin is a polypropylene random copolymer containing 1-butene and/or ethylene as a comonomer, the foamed polypropylene-resin particles having an expansion ratio of 15 or more and 45 or less, the method comprising:

dispersing polypropylene-resin particles containing polyethylene glycol and/or glycerin together with an aqueous dispersion medium in a pressure-resistant container, wherein the polyethylene glycol and/or glycerin is contained in an amount of 0.01% by weight or more and 2% by weight or less in 100% by weight of the polypropylene-resin particles;

introducing carbon dioxide gas as a foaming agent into the pressure-resistant container; impregnating the polypropylene-resin particles with the foaming agent under a heating and pressure condition; and then discharging the polypropylene-resin particles into an area having a lower pressure than an internal pressure of the pressure-resistant container and having an atmosphere temperature of higher than 80°C and not higher than 110°C, thereby foaming the polypropylene-resin particles.

**2.** The method for manufacturing foamed polypropylene-resin particles according to claim 1, wherein the foamed polypropylene-resin particles have an expansion ratio of 18 or more and 25 or less.

**3.** The method for manufacturing foamed polypropylene-resin particles according to claim 2, wherein the polypropylene random copolymer has a melting point of 125°C or higher

**4.** The method for manufacturing foamed polypropylene-resin particles according to any one of claims 1 to 3, wherein the polypropylene resin contains an inorganic nucleating agent.

**5.** The method for manufacturing foamed polypropylene-resin particles according to any one of claims 1 to 4, wherein the foaming agent is used in an amount of 3 parts by weight or more and 60 parts by weight or less relative to 100 parts by weight of the polypropylene-resin particles.

**6.** One-step foamed polypropylene-resin particles manufactured by the method according to any one of claims 1 to 5.

**7.** An in-mold foam molded body produced by in-mold foam molding of the one-step foamed polypropylene-resin particles according to claim 6.

## Patentansprüche

**1.** Ein Verfahren zur Herstellung von geschäumten Polypropylenharzteilchen durch ein einziges Schäumverfahren, wobei die geschäumten Polypropylenharzteilchen ein Wärmeverformungsverhältnis von -2% oder mehr und +2% oder weniger aufweisen, wobei das Wärmeverformungsverhältnis ein Verhältnis der Veränderung der Schüttdichte vor und nach Erwärmen bei einer Temperatur von 15°C niedriger als ein Schmelzpunkt eines Polypropylenharzes als ein Substratharz ist, wobei das Polypropylenharz ein statistisches Polypropylencopolymer ist, das 1-Buten und/oder Ethylen als ein Comonomer enthält, wobei die geschäumten Polypropylenharzteilchen ein Ausdehnungsverhältnis von 15 oder mehr und 45 oder weniger aufweisen, wobei das Verfahren umfasst:

Dispergieren von Polypropylenharzteilchen, die Polyethylenglykol und/oder Glycerin enthalten, zusammen mit einem wässrigen Dispersionsmedium in einem druckbeständigen Behälter, wobei das Polyethylenglykol und/oder Glycerin in einer Menge von 0,01 Gew.-% oder mehr und 2 Gew.-% oder weniger in 100 Gew.-% der Polypropylenharzteilchen enthalten ist;

Einbringen von Kohlenstoffdioxidgas als ein Schäumungsmittel in den druckbeständigen Behälter;

Imprägnieren der Polypropylenharzteilchen mit dem Schäumungsmittel unter einer Wärme- und Druckbedingung; und dann

Abgeben der Polypropylenharzteilchen in einen Bereich, der einen niedrigeren Druck als einen Innendruck des druckbeständigen Behälters aufweist und eine Atmosphärentemperatur von mehr als 80°C und nicht mehr als 110°C aufweist, wodurch die Polypropylenharzteilchen geschäumt werden.

2. Das Verfahren zur Herstellung von geschäumten Polypropylenharzteilchen nach Anspruch 1, wobei die geschäumten Polypropylenharzteilchen ein Ausdehnungsverhältnis von 18 oder mehr und 25 oder weniger aufweisen.

3. Das Verfahren zur Herstellung von geschäumten Polypropylenharzteilchen nach Anspruch 2, wobei das statistische Polypropylencopolymer einen Schmelzpunkt von 125°C oder mehr und 155°C oder weniger aufweist.

4. Das Verfahren zur Herstellung von geschäumten Polypropylenharzteilchen nach einem der Ansprüche 1 bis 3, wobei das Polypropylenharz ein anorganisches Nukleierungsmittel enthält.

5. Das Verfahren zur Herstellung von geschäumten Polypropylenharzteilchen nach einem der Ansprüche 1 bis 4, wobei das Schäumungsmittel in einer Menge von 3 Gewichtsteilen oder mehr und 60 Gewichtsteilen oder weniger, bezogen auf 100 Gewichtsteile der Polypropylenharzteilchen, verwendet wird.

6. In einem Schritt geschäumte Polypropylenharzteilchen, hergestellt durch das Verfahren nach einem der Ansprüche 1 bis 5.

7. Ein in der Form geschäumter Körper, hergestellt durch Formen in der Form der in einem Schritt geschäumten Polypropylenharzteilchen nach Anspruch 6.

**Revendications**

1. Méthode de production de particules de résine polypropylène expansées par un procédé d'expansion simple, les particules de résine polypropylène expansées ayant un taux de déformation thermique de -2 % ou plus et +2 % ou moins, le taux de déformation thermique étant un taux de variation de densité apparente avant et après chauffage à une température 15 °C inférieure à un point de fusion d'une résine polypropylène à titre de résine de substrat, dans laquelle la résine polypropylène est un copolymère aléatoire de polypropylène contenant du 1-butène et/ou de l'éthylène à titre de comonomère(s), les particules de résine polypropylène expansées ayant un taux d'expansion de 15 ou plus et de 45 ou moins, la méthode comprenant :

la dispersion de particules de résine polypropylène contenant du polyéthylène glycol et/ou de la glycérine avec un milieu de dispersion aqueux dans un récipient résistant à la pression, dans laquelle le polyéthylène glycol et/ou la glycérine est contenu en une quantité de 0,01 % en poids ou plus et de 2 % en poids ou moins dans 100 % en poids de particules de résine polypropylène ;

l'introduction de dioxyde de carbone gazeux à titre d'agent d'expansion dans le récipient résistant à la pression ;

l'imprégnation des particules de résine polypropylène avec l'agent d'expansion dans une condition de chauffage et de pression ; puis

la décharge des particules de résine polypropylène dans une zone sous une pression plus basse qu'une pression interne du récipient résistant à la pression et ayant une température d'atmosphère supérieure à 80 °C et inférieure ou égale à 110 °C, pour expanser ainsi les particules de résine polypropylène.

2. Méthode de production de particules de résine polypropylène expansées selon la revendication 1, dans laquelle les particules de résine polypropylène expansées ont un taux d'expansion de 18 ou plus et de 25 ou moins.

3. Méthode de production de particules de résine polypropylène expansées selon la revendication 2, dans laquelle le copolymère aléatoire de polypropylène a un point de fusion de 125 °C ou plus et de 155 °C ou moins.

**4.** Méthode de production de particules de résine polypropylène expansées selon l'une quelconque des revendications 1 à 3, dans laquelle la résine polypropylène contient un agent de nucléation inorganique.

**5.** Méthode de production de particules de résine polypropylène expansées selon l'une quelconque des revendications 1 à 4, dans laquelle l'agent d'expansion est utilisé en une quantité de 3 parties en poids ou plus et de 60 parties en poids ou moins pour 100 parties en poids des particules de résine polypropylène.

**6.** Particules de résine polypropylène expansées en une étape produites par la méthode selon l'une quelconque des revendications 1 à 5.

**7.** Corps moulé en mousse dans le moule produit par moulage de mousse dans le moule des particules de résine polypropylène expansées en une étape selon la revendication 6.

[Fig. 1]

[Fig. 2]

[Fig. 3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01242638 A
- JP H07258455 A
- WO 2008139822 A
- JP 2004067768 A

- JP 2001151928 A
- WO 2009075208 A
- JP 2009030048 A